# EUROPEAN PATENT SPECIFICATION

(11) **EP 3 279 577 B1**
(45) Date of publication and mention of the grant of the patent: **28.07.2021**
(21) Application number: 15871310.7
(22) Date of filing: 02.04.2015
(51) Int. Cl.: F24F 11/30, F24F 11/62

(54) **AIR-CONDITIONING DEVICE**
KLIMAANLAGE
DISPOSITIF DE CLIMATISATION

(43) Date of publication of application: 07.02.2018
(73) Proprietor: MITSUBISHI ELECTRIC CORPORATION, Chiyoda-ku Tokyo 100-8310 (JP)
(72) Inventor: OKAMOTO, Akira, Tokyo 100-8310 (JP)
(74) Representative: Pfenning, Meinig & Partner mbB
(86) International application number: PCT/JP2015/060479
(87) International publication number: WO 2016/157498

(56) References cited:
- EP-A2- 2 058 598
- CA-A1- 2 791 973
- JP-A- 2004 279 000
- JP-A- 2010 157 942
- US-A1- 2005 119 766
- US-A1- 2010 308 119
- US-A1- 2012 116 592
- US-A1- 2012 221 149
- US-A1- 2013 113 284
- US-A1- 2013 178 985
- US-A1- 2013 190 932
- US-A1- 2014 031 992
- US-A1- 2014 142 763

## Description

### Field

The present invention relates to an air conditioning apparatus that performs an air conditioning operation according to a schedule set in advance.

### Background

An air conditioning apparatus that performs an air conditioning operation for a certain period (one week, for example) according to a schedule set in advance is conventionally known. In this type of air conditioning apparatus, the schedule of the air conditioning operation is controlled based on a setting table in which a schedule including a start time, an end time, and the like is set. Accordingly, when a part of the schedule is changed suddenly, the schedule control needs to be reset or the air conditioning operation needs to be manually started and ended by a user at changed start and end times. Meanwhile, there has been conventionally proposed a technique that enables stored setting information to be output at an automatic transmission timing for operation/stop times set by a user in the setting information to ensure coincidence of data between a remote controller and a reception side and to change a setting table in which a schedule is set (see, for example, Patent Literature 1). An environmental controller suitable to control heating, ventilation and air conditioning equipment (HVAC equipment) is known which follows a program schedule, wherein the program schedule may be overridden by a defined hold event that a user selects to be implemented (see, for example, Patent Literature 2).

### Citation List

### Patent Literature

Patent Literature 1: Japanese Patent Application Laid-open No. 2010-243074
Patent Literature 2: US 2014/0142763 A1

### Summary

### Technical Problem

In general, a partial change of a schedule of an air conditioning operation is temporarily performed associated with a change in a plan of a target day or time slot. Therefore, if the setting table is changed each time the schedule of the air conditioning operation is partially changed, the setting table needs to be returned to that of the original schedule after passage of the changed time, which causes changing work to be burdensome.

The present invention has been achieved to solve the above problem, and an object of the present invention is to provide an air conditioning apparatus that can easily achieve a comfortable air conditioning operation without changing a setting table in which a schedule is set. Solution to Problem

There is provided an air conditioning apparatus according to claim 1.

### Advantageous Effects of Invention

According to the air conditioning apparatus of the present invention, it is possible to easily achieve a comfortable air conditioning operation because desired target time slots can be changed without changing a setting table in which a schedule is set.

### Brief Description of Drawings

FIG. 1 is a block diagram of an air conditioning apparatus according to a first embodiment of the present invention.
FIG. 2 is a diagram illustrating an example of a setting table in which a schedule of an air conditioning operation is set.
FIG. 3 is a diagram illustrating an example of the setting table in which a target time slot of which a schedule is desired to be changed.
FIG. 4 is a flowchart illustrating an example of a procedure of setting operation information of the target time slot in the first embodiment.
FIG. 5 is a diagram illustrating contents of settings in a case where a schedule of an air conditioning operation is changed in a second embodiment.
FIG. 6 is a diagram illustrating an example of a setting table in which a target time slot of which a schedule is desired to be changed.
FIG. 7 is a flowchart illustrating an example of a procedure of setting operation information of the target time slot in the second embodiment.
FIG. 8 is a diagram illustrating contents of settings in a case where the schedule of the air conditioning operation is changed in the third embodiment.
FIG. 9 is a diagram illustrating contents of settings in a case where the schedule of the air conditioning operation is changed in the third embodiment.
FIG. 10 is a diagram illustrating an example of the setting table in which the target time slot of which a schedule is desired to be changed.
FIG. 11 is a flowchart illustrating an example of a procedure of setting operation information of a target time slot in a third embodiment.

### Description of Embodiments

Exemplary embodiments of an air conditioning apparatus according to the present invention will be explained below in detail with reference to the accompanying drawings. The present invention is not limited to the embodiments.

### First embodiment.

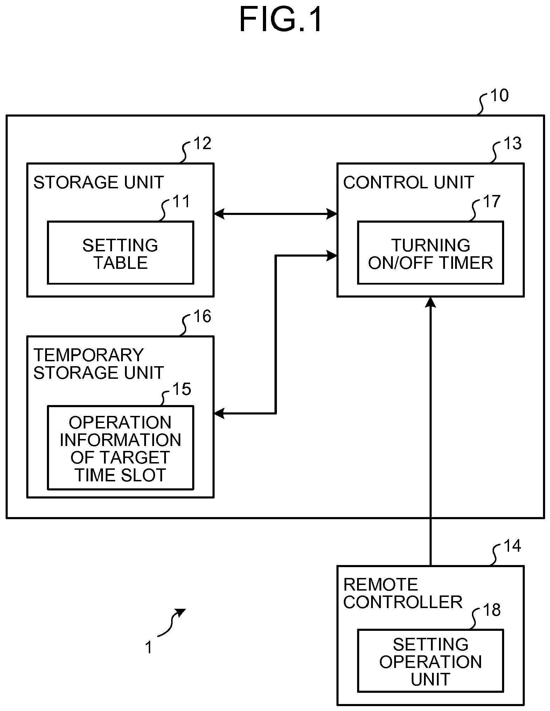

FIG. 1 is a block diagram of an indoor device of an air conditioning apparatus according to a first embodiment of the present invention. An air conditioning apparatus 1 includes an indoor device 10 installed indoors and an outdoor device (not illustrated) installed outdoors, and causes a refrigerant compressed by the outdoor device to circulate between the indoor device 10 and the outdoor device to perform an air conditioning operation including cooling and heating of an indoor space in which the indoor device 10 is installed. The indoor device 10 includes a storage unit 12 that stores therein a setting table 11 in which a schedule of an air conditioning operation for one week as a given period is set, and a control unit 13 that executes operation control on the air conditioning operation according to the schedule in the setting table 11. The indoor device 10 also includes a remote controller 14 that is connected to be communicable with the control unit 13 to set operation information 15 of a target time slot that corresponds a part of one week, and a temporary storage unit 16 that temporarily stores therein the operation information 15 of the target time slot set by the remote controller 14. The remote controller 14 includes a setting operation unit 18 for performing various settings.

The control unit 13 is constituted of a computer such as a microcomputer to perform an air conditioning operation. The control unit 13 includes a turning-on/off timer 17 having a clock function. In the first embodiment, the turning-on/off timer 17 is configured to include a turning-on timer function to set a start time of the air conditioning operation, and a turning-off timer function to set an end time of the air conditioning operation. The schedule in the setting table 11, and the operation information 15 including a start time and an end time of a target time slot, which will be described later, are set by manipulating the setting operation unit of the turning-on/off timer 17. In the turning-on/off timer 17, a normal timer operation can also be manually set via the setting operation unit 18 of the remote controller 14, separately from the operation information 15 of the target time slot.

The storage unit 12 stores therein the setting table 11 in which a schedule of the air conditioning operation, for example, for one week is set in advance. The schedule in the setting table 11 can be set via the setting operation unit 18 of the remote controller 14. Specifically, after a scheduling function is selected from the setting operation unit 18, the schedule for one week is set and the setting table 11 in which the schedule is set is stored in the storage unit 12 via the control unit 13. In the setting table 11, a start time and an end time of the air conditioning operation, a setting temperature and an air volume during the air conditioning operation, and the like are set as the schedule of the air conditioning operation. The given period of which the schedule can be set is not limited to one week and can be changed to one day or one month, for example, as appropriate.

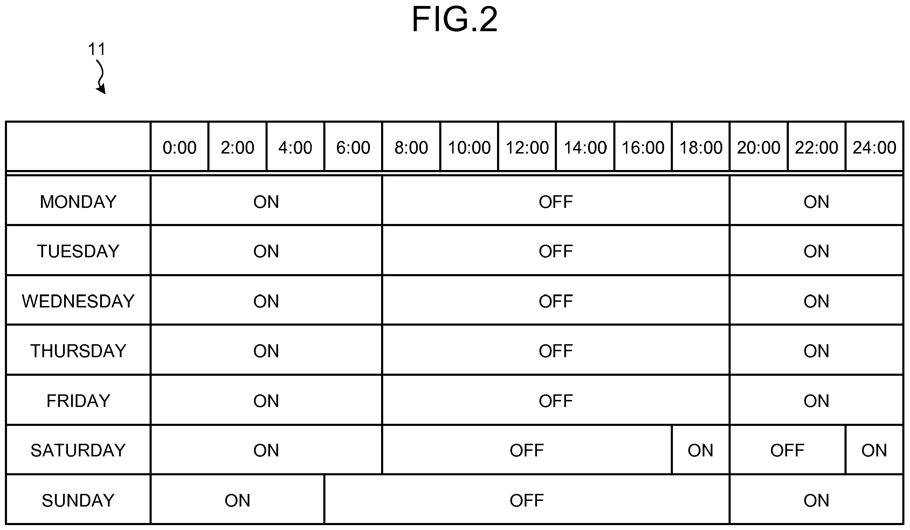

FIG. 2 is a diagram illustrating an example of the setting table in which a schedule of an air conditioning operation is set. In FIG. 2, time slots in which the air conditioning operation is performed are denoted by ON and time slots in which the air conditioning operation is stopped are denoted by OFF. In FIG. 2, a schedule of the air conditioning operation for one week is set and the set schedule is repeatedly performed. In the example of FIG. 2, a schedule in which the air conditioning operation is performed from 12 a.m. (0:00) to 8 a.m., is stopped from 8 a.m. to 8 p.m., and is performed again from 8 p.m. to 12 a.m. is set for Monday. Accordingly, in this schedule, control is executed to set a turning-off timer that stops the air conditioning operation at 8 a.m. and set a turning-on timer that starts the air conditioning operation at 8 p.m..

The same schedule as that for Monday is set also for Tuesday to Friday. Meanwhile, for Saturday and Sunday as holidays, respective schedules are set because life styles are different from that on Monday to Friday as weekdays.

In the example of FIG. 2, a schedule is set for Saturday so that the air conditioning operation is performed from 12 a.m. to 8 a.m., is stopped from 8 a.m. to 6 p.m., is performed from 6 p.m. to 8 p.m., is stopped from 8 p.m. to 12 a.m., and is performed again from 12 a.m.. Accordingly, in this schedule, control is executed to set the turning-off timer at 8 a.m., then set the turning-on timer at 6 p.m., set the turning-off timer at 8 p.m., and to set the turning-on timer at 12 a.m..

In this way, the air conditioning apparatus 1 includes the setting table 11 in which the schedule for one week is set in advance, and executes the operation control on the air conditioning operation according to the set schedule. Meanwhile, it is considered that a sudden plan change and the like often occur and, for example, a visitor may stay from 4 p.m. to 10 p.m. on Saturday on short notice. In this case, the schedule in the setting table 11 may be changed according to the plan of the coming visitor. However, in many cases, such a schedule change occurs temporarily associated with a plan change on a target day or in a target time slot. Furthermore, when the setting table 11 is changed, the setting table 11 needs to be returned to that of the original schedule after the visitor leaves, which makes the changing work become burdensome.

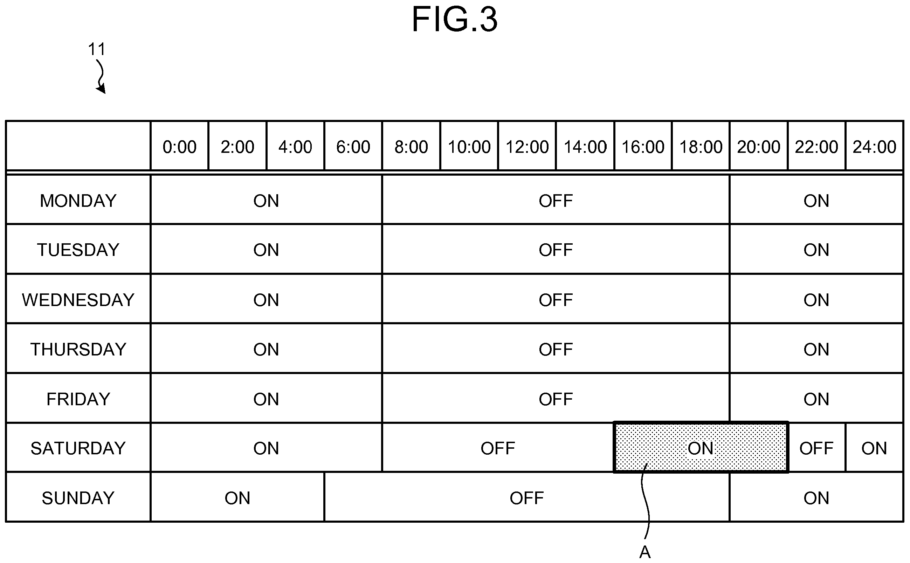

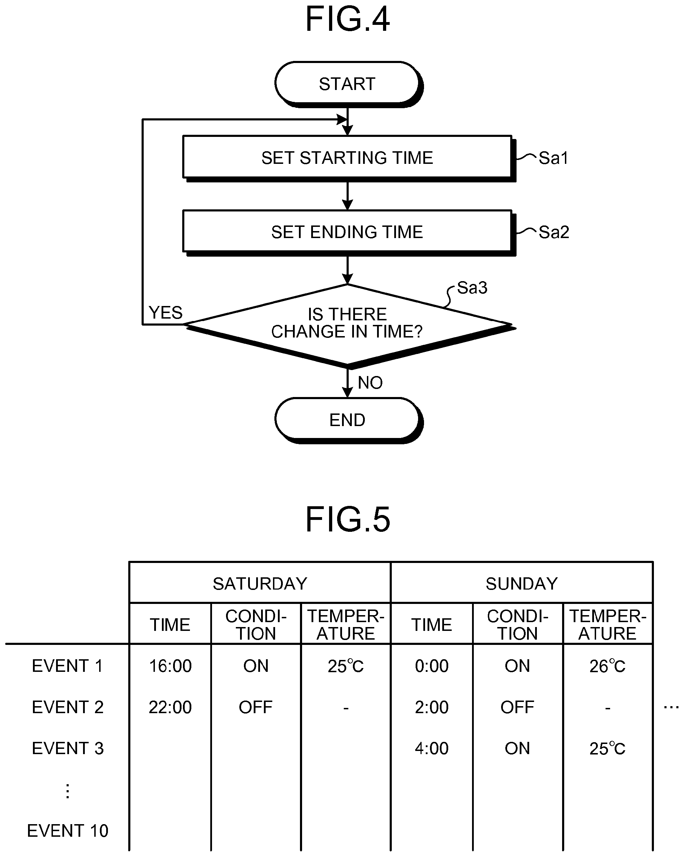

Therefore, as illustrated in FIG. 1, the indoor device 10 includes the temporary storage unit 16 that stores therein the operation information 15 of a target time slot in which the schedule is desired to be changed. A target time slot A is a partial time slot in one week as the given time and, in the example descried above, is from 4 p.m. to 10 p.m. during which the visitor is expected to come as illustrated in FIG. 3. The operation information 15 of the target time slot A can be set by the setting operation unit 18 of the remote controller 14. Specifically, as illustrated in FIG. 4, a day of a week of the target time slot A is first selected and then a starting time of the target time slot A is set (Sa1). Next, an ending time of the target time slot A is set (Sa2). Subsequently, whether there is a change in the set starting and ending times is determined (Sa3). The processing returns to a starting-time setting when there is a change, and the settings are completed when there is no change. The turning-on/off timer 17 is a simple on/off timer having a simple configuration and the starting and ending times indicate timer setting times of the turning-on/off timer 17, respectively. For example, when the turning-on timer function is used to set a starting time, the set starting time becomes a start time of the air conditioning operation and the set ending time becomes an end time of the air conditioning operation. When the turning-off timer function is used to set a starting time, the set starting time becomes an end time of the air conditioning operation and the set ending time becomes a start time of the air conditioning operation. In the example of FIG. 3, 4 p.m. on Saturday is set as the starting time and 10 p.m. is set as the ending time using the turning-on timer function of the turning-on/off timer 17.

The set starting time, which is the start time of the air conditioning operation, and the set ending time, which is the end time of the air conditioning operation, are stored in the temporary storage unit 16 as the operation information 15 for the target time slot. When the operation information 15 for the target time slot is stored in the temporary storage unit 16, the control unit 13 reads the operation information 15 from the temporary storage unit 16 when the stored target time slot comes, and controls the air conditioning operation based on the read operation information 15 in priority to the schedule in the setting table 11. That is, the control unit 13 executes control to perform the air conditioning operation from 4 p.m. to 10 p.m. and to stop the air conditioning operation at 10 p.m. based on the operation information 15. This enables a comfortable air conditioning operation according to a desired schedule change easily without changing the schedule in the setting table 11. Because a change to the desired schedule can be easily achieved, an unnecessary air conditioning operation can be suppressed and energy consumption can be reduced. Furthermore, the start time and the end time of a target time slot can be set just using the turning-on/off timer 17 in the first embodiment, and thus settings can be easily manipulated.

The control unit 13 erases the operation information 15 of the target time slot stored in the temporary storage unit 16 from the temporary storage unit 16 after the target time has passed. Accordingly, the schedule of the setting table 11 does not need to be returned to the original schedule after a sudden schedule change. Therefore, the schedule can be changed easily and lightly at any time and thus management of a comfortable air conditioning operation can be performed smoothly.

### Second embodiment.

A second embodiment of the present invention is described next. While a configuration in which the turning-on/off timer 17 that sets the operation information 15 of a target time slot is a simple turning-on/off timer is described in the first embodiment, a configuration in which the turning-on/off timer 17 is a turning-on/off timer of an event-registration type that designates a start time is described in the second embodiment. An air conditioning apparatus according to the second embodiment has the same configuration as that of the air conditioning apparatus illustrated in FIG. 1 and thus descriptions thereof will be omitted. The setting table 11 in which a schedule for one week is set is identical to that illustrated in FIG. 2.

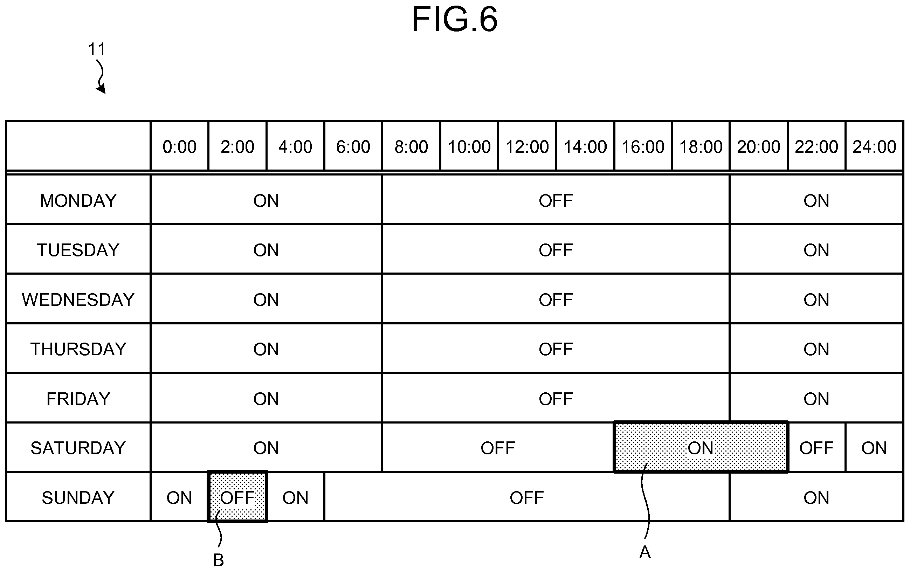

FIG. 5 is a diagram illustrating settings in a case where a schedule of the air conditioning operation is changed in the second embodiment. In the second embodiment, the turning-on/off timer 17 is an turning-on/off timer of an event-registration type and time settings in a turning-on timer and a turning-off timer are displayed on the remote controller 14 with respect to each event. While Saturday and Sunday are illustrated in FIG. 5 as an example, a displayed mode can be changed appropriately. Target time slots in which the schedule is desired to be changed are a target time slot A from 4 p.m. to 10 p.m. on Saturday and a target time slot B from 2 a.m. to 4 a.m. on Sunday as illustrated in FIG. 6.

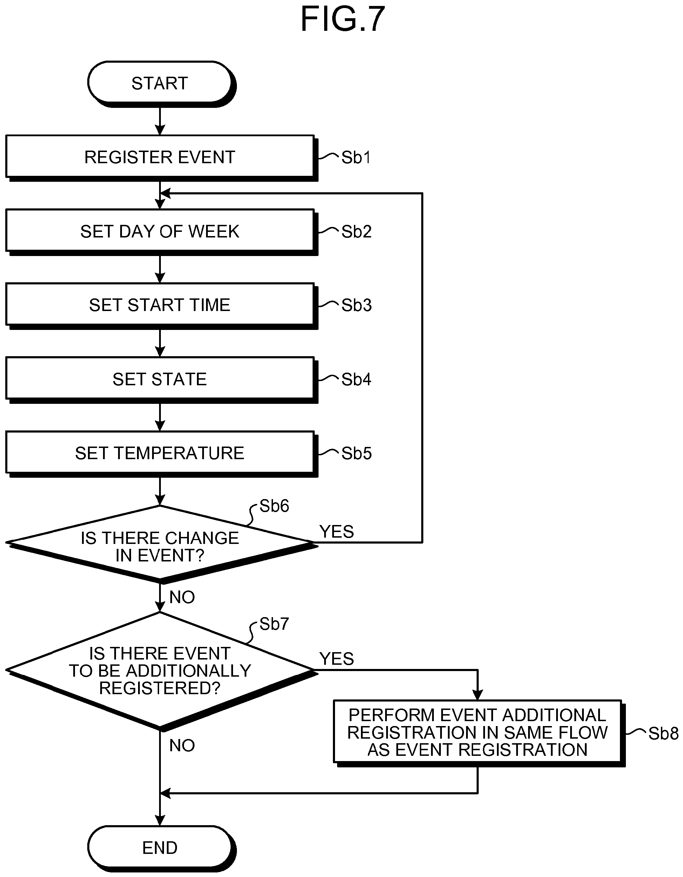

In this turning-on/off timer of the event-registration type, a time when an event starts, an operation state (operating or stopped) at the start of the event, and a setting temperature are registered with respect to each event as illustrated in FIG. 5. Specifically, when the operation information 15 for the target time slot A is to be set, an event is first registered (Sb1), a day of a week of the registered event is set (Sb2), and also a start time of the event is set (Sb3) as illustrated in FIG. 7. Specifically, an event 1 is registered as an event, and the start time of the event 1 is set to 4 p.m. (16:00). The start time of the event 1 becomes the start time of the target time slot A.

Subsequently, the state of the air conditioning operation at the start of the event 1 is set to operating (ON) (Sb4) and also the setting temperature is set to 25ºC (Sb5). Whether there is a change in the event 1 to which these items have been set is determined (Sb6). The processing returns to Step Sb2 when there is a change and the processing proceeds to Step Sb7 when there is no change.

Next, whether there is an event to be additionally registered is determined (Sb7). The processing proceeds to Step Sb8 when there is an event to be additionally registered and the settings are completed when there is no event to be additionally registered. In this example, there is an event 2 and thus the processing proceeds to Step Sb8 to perform identical processes to those at Steps Sb1 to Sb7 described above. Specifically, the event 2 is registered as an event and the start time of the event 2 is set to 10 p.m. (22:00). The start time of the event 2 becomes the end time of the target time slot A. Further, the state of the air conditioning operation at the start of the event 2 is set to stopped (OFF). Because the air conditioning operation is stopped in this case, a temperature setting is skipped. In this way, as for Saturday, the event 1 is set such that the air conditioning operation is started at 4 p.m. on Saturday at 25ºC as illustrated in FIG. 5. The event 2 is set such that the air conditioning operation is stopped at 10 p.m. on Saturday. This enables control of the turning-on/off timer to perform the operation at 25ºC from 4 p.m. to 10 p.m. on Saturday.

Next, the operation information 15 for the target time slot B is set. In this turning-on/off timer of the event-registration type, events are registered for each day of a week, and each day of a week is managed with respect to 24 hours starting from 12 a.m.. Therefore, the target time slot B is registered as an event on Sunday. Accordingly, as for Sunday, contents that the air conditioning operation is started at 12 a.m. on Sunday at 26ºC are set as an event 1 as illustrated in FIG. 5. Further, contents that the air conditioning operation is stopped at 2 a.m. on Sunday are set as an event 2. Contents that the air conditioning operation is started at 4 a.m. on Sunday at 25ºC are set as an event 3. This enables control of the turning-on/off timer to perform the operation from 12 a.m. to 2 a.m. on Sunday at 26ºC, stop the operation from 2 a.m. to 4 a.m., and to perform the operation from 4 a.m. at 25ºC.

Respective pieces of setting information for the set events are stored in the temporary storage unit 16 as the respective operation information 15 of the target time slot A and the target time slot B. In a case where the respective pieces of operation information 15 of the target time slots A and B are stored in the temporary storage unit 16, the control unit 13 reads the relevant pieces of operation information 15 from the temporary storage unit 16 when the stored target time slots A and B come, and controls the air conditioning operation based on the read operation information 15 in priority to the schedule in the setting table 11. That is, the control unit 13 executes control to perform the air conditioning operation at 25ºC from 4 p.m. to 10 p.m. on Saturday and to stop the air conditioning operation at 10 p.m. based on the operation information 15. The control unit 13 further executes control to perform the air conditioning operation at 26ºC from 12 a.m. to 2 a.m. on Sunday, stop the air conditioning operation from 2 a.m. to 4 a.m., and to perform again the air conditioning operation at 25ºC from 4 a.m.. This enables a comfortable air conditioning operation according to a desired schedule change easily without changing the schedule in the setting table 11. Because the schedule can be easily changed to a desired one, an unnecessary air conditioning operation can be suppressed and energy consumption can be reduced. Furthermore, because the turning-on/off timer of the event-registration type is used in the second embodiment, the schedule can be easily changed even when there are a plurality of target time slots for which a change is desired.

The control unit 13 erases the operation information 15 of the target time slots stored in the temporary storage unit 16 from the temporary storage unit 16 after the target times have passed. Accordingly, there is no need to return the setting table 11 to the original schedule after a sudden schedule change. Therefore, the schedule can be changed easily and lightly at any time and thus management of a comfortable air conditioning operation can be performed smoothly.

### Third embodiment.

A third embodiment of the present invention is described next. While the turning-on/off timer 17 is a turning-on/off timer of an event-registration type that designates a start time in the second embodiment, a configuration in which the turning-on/off timer 17 is a turning-on/off timer of an event-registration type that does not designate a start time is described in the third embodiment. An air conditioning apparatus according to the third embodiment has the same configuration as that of the air conditioning apparatus illustrated in FIG. 1 and thus descriptions thereof will be omitted. The setting table 11 in which a schedule for one week is set is the same as that illustrated in FIG. 2.

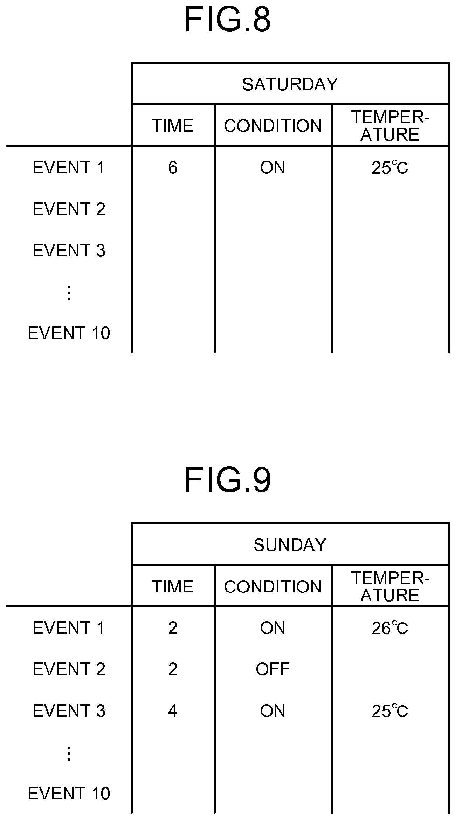

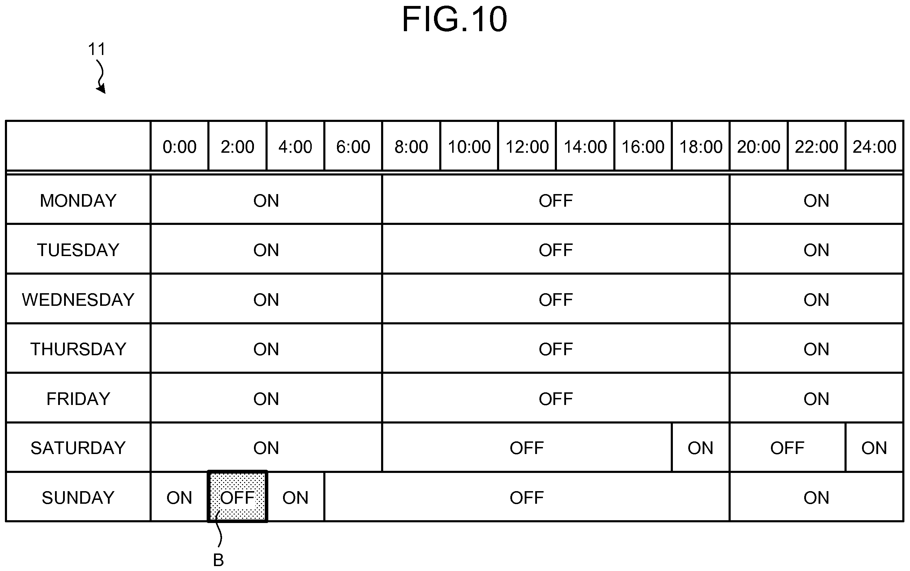

FIGS. 8 and 9 are diagrams illustrating parts of schedules of an air conditioning operation in the third embodiment, respectively. In the third embodiment, the turning-on/off timer 17 is a turning-on/off timer of an event-registration type that does not designate a start time and easily changes a latest schedule. Therefore, durations of events are displayed on the remote controller 14 with respect to each event. While FIG. 8 illustrates Saturday and FIG. 9 illustrates Sunday as examples, displayed modes can be changed appropriately. Target time slots in which the schedule is desired to be changed are the target time slot A from 4 p.m. to 10 p.m. on Saturday as illustrated in FIG. 3 and a target time slot B from 2 a.m. to 4 a.m. on Sunday as illustrated in FIG. 10.

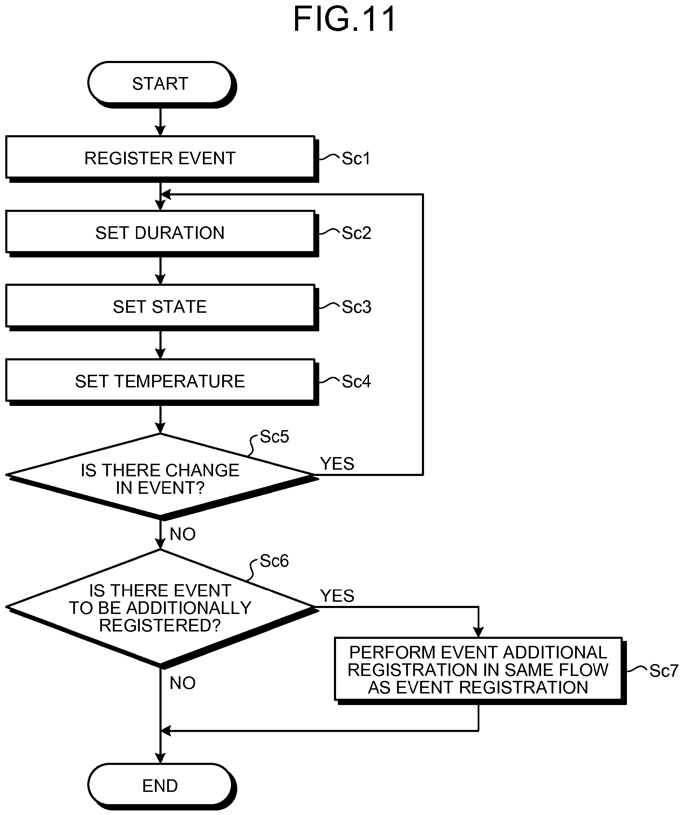

In the turning-on/off timer of the event-registration type that does not designate a start time, a duration in which an event continues, an operation state (operating or stopped) while the event continues, and a setting temperature are registered with respect to each event as illustrated in FIGS. 8 and 9. Specifically, when the operation information 15 for the target time slot A is to be set, an event is first registered (Sc1), and a duration in which the registered event continues is set (Sc2) as illustrated in FIG. 11. Specifically, an event 1 is registered as an event and a duration of the event 1 is set to 6 hours.

Subsequently, a state of the air conditioning operation at the start of the event 1 is set to operating (ON) (Sc3) and a setting temperature is set to 25ºC (Sc4). Whether there is a change in the event 1 to which the above items have been set is determined (Sc5). The processing returns to Step Sc2 when there is a change, and the processing proceeds to Step Sc6 when there is no change.

In the third embodiment, the turning-on/off timer of the event-registration type that does not designate a start time is used. Therefore, when the settings above mentioned are performed, for example, before 4 p.m. on Saturday, the air conditioning operation at the setting temperature of 25ºC can be performed for 6 hours almost from 4 p.m. to 10 p.m..

Next, whether there is an event to be additionally registered is determined (Sc6). The processing proceeds to Step Sc7 when there is an additional registration of an event and the settings are completed when there is no additional registration. Because there is not an event 2 in this example, the settings are completed. When there is an additional registration of an event, the processing proceeds to Step Sc7 to perform identical processes as those at Steps Sc1 to Sc6 described above.

The setting information with respect to each of the set events is stored in the temporary storage unit 16 as the operation information 15 for the target time slot A. When the operation information 15 of the target time slot A is stored in the temporary storage unit 16, the control unit 13 reads the operation information 15 from the temporary storage unit 16 and controls the air conditioning operation based on the read operation information 15 in priority to the schedule in the setting table 11. That is, when the operation information 15 is stored in the temporary storage unit 16, the control unit 13 controls the air conditioning operation based on the operation information 15 in priority to the schedule in the setting table 11. In the third embodiment, the control on the air conditioning operation is executed for the set duration from a time point where a setting is changed and thus the schedule can be easily changed even just before a setting change. A time from when the operation information 15 of a target time slot is set to when the air conditioning operation based on the operation information 15 is actually performed can be changed appropriately, and the air conditioning operation can be performed after a predetermined time has passed from storage of the operation information 15 in the temporary storage unit 16. Furthermore, the control unit 13 erases the operation information 15 of the target time slot stored in the temporary storage unit 16 from the temporary storage unit 16 when the target time has passed. Therefore, there is no need to change the setting table 11 to the original schedule after a sudden schedule change. Accordingly, a schedule change can be performed easily and lightly at any time and thus management of a comfortable air conditioning operation can be performed smoothly.

Subsequently, the operation information 15 of the target time slot B is set before 12 a.m. on Sunday. The setting procedure is the same as that illustrated in FIG. 11 and thus descriptions thereof will be omitted. As for Sunday, contents of an event 1 that the air conditioning operation is continued at 26ºC for 2 hours from about 12 a.m. on Sunday are set as illustrated in FIG. 9. Contents of an event 2 that the air conditioning operation is stopped for 2 hours after the end of the event 1 are set. Contents of an event 3 that the air conditioning operation is continued at 25ºC for 4 hours after the end of the event 2 are set. In this way, although being rough, control of the turning-on/off timer to operate the air conditioning operation at 26ºC on Sunday from 12 a.m. to 2 a.m., stop from 2 a.m. to 4 a.m., and to operate at 25ºC from 4 a.m. is executed.

In the third embodiment, the turning-on/off timer 17 is a turning-on/off timer of an event-registration type that does not designate a start time. Therefore, a schedule can be changed easily even just before a setting change. Furthermore, a schedule can be easily changed to a desired one and thus an unnecessary air conditioning operation can be suppressed to reduce energy consumption.

### Reference Signs List

1 air conditioning apparatus, 10 indoor device, 11 setting table, 12 storage unit, 13 control unit, 14 remote controller, 15 operation information, 16 temporary storage unit, 17 turning-on/off timer, 18 setting operation unit, A, B target time slot.

## Claims

1. An air conditioning apparatus (1) including
a storage unit (12) that stores therein a setting table (11) in which a schedule of an air conditioning operation for a given period is set, and a control unit (13) that executes operation control according to the schedule in the setting table (11),
**characterized in that** the air conditioning apparatus comprises:
a remote controller (14) that sets operation information (15) of target time slots (A, B) as parts of the given periods;
a temporary storage unit (16) that temporarily stores therein the set operation information (15) of the target time slots (A, B); and
a **turning**-on/off timer (17) of an event-registration type that is capable of registering starts and ends of air conditioning operations of the target time slots (A, B) as events via the remote controller (14) and setting
a) start times of the events, wherein the start time of each of the events and an operation behavior (15) at the start time of each of the events are registered to set the operation information (15), and when the operation information (15) of at least one of the target time slots (A, B) is stored in the temporary storage unit (16), the control unit (13) executes operation control based on the operation information (15) of the target time slot stored in the temporary storage unit (16) in priority to the schedule in the setting table (11) at each time of the start time; or
b) a duration of each of the events as the target time slot (A), wherein the duration of each of the events and an operation behavior (15) within the duration are registered to set the target time slot and an operation behavior (15) in the target time slot, when the operation information (15) of the target time slots (A) is stored in the temporary storage unit (16), the control unit (13) executes operation control based on the operation information (15) of the target time slot stored in the temporary storage unit (16) in priority to the schedule in the setting table (11) for the duration from a time point where the duration is registered.

2. The air conditioning apparatus according to claim 1, wherein the operation information (15) of the target time slot is erased from the temporary storage unit (16) when operation control based on the operation information (15) ends.

## Patentansprüche

1. Klimaanlage (1), umfassend
eine Speichereinheit (12), die darin eine Einstellungstabelle (11) speichert, in der ein Zeitplan eines Klimatisierungsbetriebs für einen gegebenen Zeitraum eingestellt ist, und
eine Steuereinheit (13), die eine Betriebssteuerung gemäß dem Zeitplan in der Einstellungstabelle (11) ausführt,
**dadurch gekennzeichnet, dass** die Klimaanlage umfasst:
eine Fernsteuerung (14), die eine Betriebsinformation (15) von Zielzeitfenstern (A, B) als Teile der gegebenen Zeiträume einstellt;
eine temporäre Speichereinheit (16), die darin temporär die eingestellte Betriebsinformation (15) der Zielzeitfenster (A, B) speichert; und
einen Einschalt-/Ausschalttimer (17) eines Ereignisregistrierungstyps, der in der Lage ist zum Registrieren von Starts und Enden von Klimatisierungsbetrieben der Zielzeitfenster (A, B) als Ereignisse über die Fernsteuerung (14) und zum Einstellen
a) von Startzeiten der Ereignisse, wobei die Startzeit jedes der Ereignisse und ein Betriebsverhalten (15) zur Startzeit jedes der Ereignisse registriert werden, um die Betriebsinformation (15) einzustellen, und wenn die Betriebsinformation (15) von mindestens einem der Zielzeitfenster (A, B) in der temporären Speichereinheit (16) gespeichert ist, die Steuereinheit (13) eine Betriebssteuerung auf Grundlage der Betriebsinformation (15) des in der temporären Speichereinheit (16) gespeicherten Zielzeitfensters in Priorität zu dem Zeitplan in der Einstellungstabelle (11) zu jeder Zeit der Startzeit ausführt; oder
b) einer Dauer jedes der Ereignisse als das Zielzeitfenster (A), wobei die Dauer jedes der Ereignisse und ein Betriebsverhalten (15) innerhalb der Dauer registriert werden, um das Zielzeitfenster und eine Betriebsinformation (15) im Zielzeitfenster einzustellen, wenn die Betriebsinformation (15) des Zielzeitfensters (A) in der temporären Speichereinheit (16) gespeichert ist, die Steuereinheit (13) eine Betriebssteuerung auf Grundlage der Betriebsinformation (15) des in der temporären Speichereinheit (16) gespeicherten Zielzeitfensters in Priorität zu dem Zeitplan in der Einstellungstabelle (11) für die Dauer von einem Zeitpunkt, zu dem die Dauer registriert wird, ausführt.

2. Klimaanlage nach Anspruch 1, wobei die Betriebsinformation (15) des Zielzeitfensters aus der temporären Speichereinheit (16) gelöscht wird, wenn eine Betriebssteuerung auf Grundlage der Betriebsinformation (15) endet.

## Revendications

1. Appareil de climatisation (1) comprenant
une unité de stockage (12) stockant une table de réglage (11) dans laquelle un programme de fonctionnement de climatisation pour une période donnée est réglé, et
une unité de commande (13) commandant le fonctionnement en fonction du programme dans la table de réglage (11),
**caractérisé en ce que** l'appareil de climatisation comprend :
une télécommande (14) réglant des informations de fonctionnement (15) de plages horaires cibles (A, B) qui font partie des périodes données ;
une unité de stockage temporaire (16) stockant temporairement les informations de fonctionnement (15) réglées pour les plages horaires cibles (A, B) ; et
une minuterie marche/arrêt (17) du type à enregistrement d'événement qui est capable d'enregistrer des débuts et fins de fonctionnements de climatisation des plages horaires cibles (A, B) comme des événements par l'intermédiaire de la télécommande (14) et de régler
a) des temps de départ des événements, dans lequel le temps de départ de chacun des événements et un comportement de fonctionnement (15) au temps de départ de chacun des événements sont enregistrés pour régler les informations de fonctionnement (15), et lorsque les informations de fonctionnement (15) d'au moins une des plages horaires cibles (A, B) sont stockées dans l'unité de stockage temporaire (16), l'unité de commande (13) commande le fonctionnement en fonction des informations de fonctionnement (15) de la plage horaire cible stockées dans l'unité de stockage temporaire (16) prioritairement par rapport au programme dans la table de réglage (11) à chaque instant du temps de départ ; ou
b) une durée de chacun des événements comme la plage horaire cible (A), dans lequel la durée de chacun des événements et un comportement de fonctionnement (15) pendant la durée sont enregistrés pour régler la plage horaire cible et un comportement de fonctionnement (15) dans la plage horaire cible, lorsque les informations de fonctionnement (15) des plages horaires cibles (A) sont stockées dans l'unité de stockage temporaire (16), l'unité de commande (13) commande le fonctionnement en fonction des informations de fonctionnement (15) de la plage horaire cible stockées dans l'unité de stockage temporaire (16) prioritairement par rapport au programme dans la table de réglage (11) pendant la durée à partir d'un point temporel où la durée est enregistrée.

2. Appareil de climatisation selon la revendication 1, dans lequel les informations de fonctionnement (15) de la plage horaire cible sont effacées de l'unité de stockage temporaire (16) lorsque la commande de fonctionnement en fonction des informations de fonctionnement (15) prend fin.
